# EUROPEAN PATENT SPECIFICATION

(11) **EP 3 576 279 B1**
(45) Date of publication and mention of the grant of the patent: **10.08.2022**
(21) Application number: 18761008.4
(22) Date of filing: 26.02.2018
(51) Int. Cl.: H02M 5/458, F24F 1/22, F24F 1/24, F25B 1/00, H02M 7/48, H02J 3/01

(54) **POWER SUPPLY SUBSTRATE, POWER SUPPLY UNIT, AND REFRIGERATING DEVICE**
STROMVERSORGUNGSSUBSTRAT, STROMVERSORGUNGSEINHEIT UND KÜHLVORRICHTUNG
SUBSTRAT D'ALIMENTATION ÉLECTRIQUE, UNITÉ D'ALIMENTATION ÉLECTRIQUE ET DISPOSITIF DE RÉFRIGÉRATION

(30) Priority: 03.03.2017 JP 2017040893
(43) Date of publication of application: 04.12.2019
(73) Proprietor: Daikin Industries, Ltd., Osaka-shi, Osaka 530-8323 (JP)
(72) Inventor: FUJIWARA Masahide, Osaka-shi Osaka 530-8323 (JP); KOTERA Keito, Osaka-shi Osaka 530-8323 (JP); HIRAOKA Nobuyasu, Osaka-shi Osaka 530-8323 (JP); ISHIZEKI Shinichi, Osaka-shi Osaka 530-8323 (JP)
(74) Representative: Hoffmann Eitle
(86) International application number: PCT/JP2018/007024
(87) International publication number: WO 2018/159552

(56) References cited:
- JP-A- 2010 283 989
- JP-A- 2012 165 509
- JP-A- 2012 165 509
- JP-A- 2012 235 633
- JP-A- 2017 038 500
- US-B1- 6 377 479
- ANTONIC D ET AL: "LIMITER LES PERTURBATIONS DE MODE COMMUN EN CEM", ELECTRONIQUE, CEP COMMUNICATION, PARIS, FR, no. 51, 1 September 1995 (1995-09-01), XP000529642, ISSN: 1157-1152

## Description

### TECHNICAL FIELD

The present invention relates to a power source board, a power source unit including the power source board, and a refrigeration apparatus including the power source board.

### BACKGROUND ART

Various electric appliances such as a refrigeration apparatus operate on electric power supplied from a commercial power source. Such an electric appliance includes, for example, a power source circuit for converting electric power from a commercial power source into desired electric power, and a control circuit for controlling a drive source (motor) for constituent devices included in the electric appliance. The power source circuit and the control circuit are mounted on a printed circuit board. Printed circuit boards are provided inside various electric appliances.

Patent Document 1 discloses an example of a known technique related to such printed circuit boards. In Patent Document 1, two printed circuit boards are housed in an air conditioner. A power source circuit and control circuits are mounted on one of the printed circuit boards. The power source circuit converts AC power from a commercial power source. The control circuits each control a compressor motor and a fan motor. On the other printed circuit board, another circuit is mounted. This circuit performs control related to components other than the compressor motor and the fan motor (e.g., control related to valves and communications between an outdoor unit and an indoor unit).

Further, Patent Document 2 describes an inrush current prevention circuit for a power supply apparatus to implement inrush current prevention on a single phase rectification circuit without adding new circuit components. Heretofore, there is provided a power supply apparatus having a three-phase rectification circuit for converting a three-phase alternating current to a direct current, a three-phase side smoothing circuit connected to DC output ends of the three-phase rectification circuit, first switching means disposed between a three-phase power supply and the three-phase rectification circuit, and an inrush current prevention circuit connected in parallel with either of two power lines connected to the first switching means, the inrush current prevention circuit includes a series connection of a current limiting resistance and second switching means. The single phase rectification circuit is connected between the current limiting resistance and the second switching means and to a neutral line of the three-phase power supply, and a single phase side smoothing circuit comprising a capacitor is connected to DC output ends of the single phase rectification circuit. The first switching means and the second switching means are operated to suppress an inrush current to the three-phase side smoothing circuit.

### CITATION LIST

### PATENT DOCUMENTS

[Patent Document 1] Japanese Unexamined Patent Publication No. HI 1-118229
[Patent Document 2] JP 2012 165509 A

### SUMMARY OF THE INVENTION

### TECHNICAL PROBLEM

As described above, when the printed circuit board is connected to the commercial power source, countermeasures against common-mode noise are essential. When currents of the same phase flow through a power source wire and a GND wire, potential difference arises between the power source wire and the GND wire, which causes the common-mode noise.

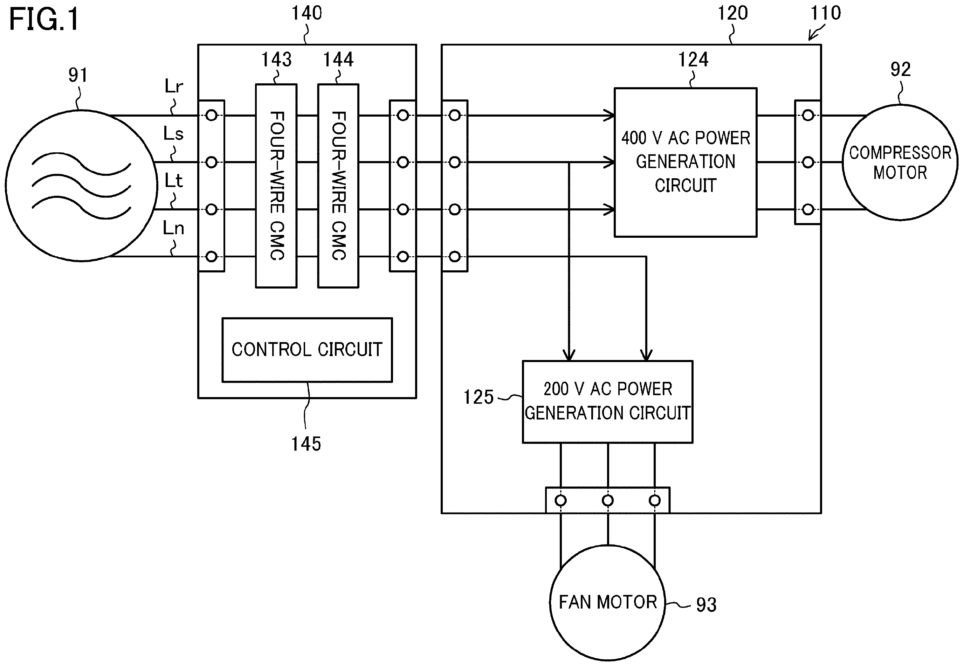

FIG. 1 shows, as a conventional example, a power source unit (110) to which a countermeasure against the common-mode noise has been taken. As illustrated in FIG. 1, the power source unit (110) includes a power source board (120) and a noise cancelling board (140), which are printed circuit boards. The power source board (120) is connected to a three-phase four-wire commercial power source (91) via the noise cancelling board (140) with harnesses (Lr, Ls, Lt) for three phases and a harness (Ln) for a neutral point. The power source board (120) carries a 400 V AC circuit (124) for generating electric power to be supplied to a compressor motor (92), and a 200 V AC circuit (125) for generating electric power to be supplied to a fan motor (93). The noise cancelling board (140) carries two four-wire common-mode choke coils (143, 144) and a control circuit (145) for controlling, for example, a refrigerant in the air conditioner.

As shown in FIG. 1, since the three-phase four-wire the commercial power source (91) is used, each of the common-mode choke coils (143, 144) is of a four-wire system corresponding to the neutral point in addition to the R, S, and T phases. The two common-mode choke coils (143, 144) are mounted side by side. Since the four-wire common-mode choke coils (143, 144) are larger in size than three- and two-wire common-mode choke coils, the common-mode choke coils (143, 144) occupy a larger area when mounted on the noise cancelling board (140).

In addition, in order to allow the noise canceling board having a single four-wire common-mode choke coil to reduce the common-mode noise as much as the noise canceling board having two four-wire common-mode choke coils, a possible measure would be making the length of a conductive wire wound around the single common-mode choke coil twice as long as the length of a conductive wire wound around each of the two common-mode choke coils, or changing a core material of the single common-mode choke coil to a material having higher noise cancelling capabilities. Even if these measures are taken, the area occupied by the single common-mode choke coil on the noise cancelling board (140) increases, and so does the height of the noise cancelling board (140). This results in the increase in the cost of the power source unit (110).

In view of the foregoing, it is therefore an object of the present invention to minimize a printed circuit board without significantly compromising the effect of reducing the common-mode noise.

### SOLUTION TO THE PROBLEM

A first aspect of the present disclosure is directed to a power source board (20) configured to supply a plurality of loads (92, 93) with different levels of power, the power source board comprising the features of independent claim 1.

The first and second common-mode choke coils (27, 28) having the above wiring structure achieve substantially the same advantageous effects in reducing the common-mode noise as the four-wire common-mode choke coil. The first and second common-mode choke coils (27, 28), which are three-wire and two-wire coils, respectively, are relatively small in size. Therefore, the first and second common-mode coils (27, 28) are easily arranged in an available space on the power source board (20), increasing the flexibility of a layout for the three-phase wire set (31r, 31s, 31t) and the neutral point wire (31n). This can minimize the power source board (20), which is a printed circuit board, without significantly compromising the effect of reducing the common-mode noise. Such features can contribute to the reduction in manufacturing costs of the power source board (20).

Also, according to the present invention, the power source board comprises a printed wiring board (PI) on which the first power generation circuit (24), the second power generation circuit (25), the first common-mode choke coil (27) and the second common-mode choke coil (28) are mounted, wherein the printed wiring board (PI) has a quadrangular shape in plan view, the printed wiring board (PI) has, in plan view, a first side (P1a) and a second side (P1b) facing the first side (P1a), the printed wiring board (PI) has a high-voltage region (a1) and a low-voltage region (a2) between the first side (P1a) and the second side (P1b), the high-voltage region (a1) including the first power generation circuit (24) and the second power generation circuit (25) mounted thereon so that the first power generation circuit (24) is located closer to the first side (P1a) than the second power generation circuit (25) generating the second output power smaller than the first output power, the low-voltage region (a2) being located closer to the second side (P1b) than the high-voltage region (a1) is, and the first common-mode choke coil (27) and the second common-mode choke coil (28) are mounted on the high-voltage region (a1) so that the second common-mode choke coil (28) is located closer to the low-voltage region (a2) than the first common-mode choke coil (27) is.

On this printed wiring board (PI), the first power generation circuit (24) generating higher power than the second power generation circuit (25), the second power generation circuit (25), and the low-voltage region (a2) are arranged in the stated order. That is, since the first power generation circuit (24) is away from the low-voltage region (a2), a low-voltage component mounted on the low-voltage region (a2) is less affected by the noise from a high-voltage component of the first power generation circuit (24). The second common-mode choke coil (28) is located closer to the low-voltage region (a2) than the first common-mode choke coil (27) is. That is, the second common-mode choke coil (28) is located relatively close to the second power generation circuit (25) corresponding to the second common-mode choke coil (28), and the first common-mode choke coil (27) is located relatively closer to the first power generation circuit (24) corresponding to the first common-mode choke coil (27). This allows the three-phase wire set (31r, 31s, 31t) and the neutral point wire (31n) between the common-mode choke coils (27, 28) and the corresponding power generation circuits (24,25) to be routed as simply as possible.

A second aspect of the present disclosure is an embodiment of the first aspect. In the third aspect, the loads (92, 93) include a compressor motor (92) and a fan motor (93) of a refrigeration apparatus (60), the first power generation circuit (24) outputs the first output power to the compressor motor (92), and the second power generation circuit (25) outputs the second output power to the fan motor (93).

A third aspect of the present disclosure is directed to a refrigeration apparatus including the features of claim 3.

Thus, an additional cooling unit such as an air-cooling fan driven by another power source is no longer necessary, and the refrigerant is effectively used to cool the inverters (24d, 25d) generating heat.

A fourth aspect of the present disclosure is an embodiment of the third aspect. In the fourth aspect, the refrigeration apparatus further includes: a casing (61) housing the loads (92, 93) and the power source board (20), wherein the casing (61) has an opening-closing plate capable of opening an inside of the casing (61), and the power source board (20) is located inside the casing (61) at a position corresponding to the opening-closing plate.

This allows the maintenance worker to freely reach the power source board (20) inside the outdoor unit casing (61) from the opening-closing plate (63a), and thus improves the ease of maintenance. In particular, since the inverters (24d, 25d) of the respective power generating circuits (24, 25) are cooled with the refrigerant, the maintenance worker can detach the opening-closing plate (63a) to open the inside of the casing (61), and check whether the inverters (24d, 25d) are properly cooled.

A fifth aspect of the present disclosure is directed to a power source unit including the features of claim 5.

The power source unit (10) includes the noise cancelling board (40) having the four-wire third common-mode choke coil (43) in addition to the power source board (20) provided with the three-wire first common-mode choke coil (27) and the two-wire second common-mode choke coil (28). When the noise cancelling board (40) is connected to the power source board (20), the common-mode noise is reduced more effectively than when the power source board (20) alone is connected. Thus, for example, in a situation where standards for countermeasures against EMI are relatively strict, the noise cancelling board (40) may be connected for use to the power source board (20). Thus, the effect of reducing the common-mode noise can be can be changed, depending on the environment in which the power source unit (10) is installed.

Moreover, the noise cancelling board (40) is provided separately from the power source board (20). Hence, the noise cancelling board (40) can have a different number of layers from the power source board (20), e.g., two layers relative to the four layers of the power source board (20). This can further reduce the production costs than in the case where the noise cancelling board (40) is designed to have four layers just like the power source board (20). In addition, since the noise cancelling board (40) carries a single four-wire third common-mode choke coil (43), the circuit configuration of the noise cancelling board (40) is relatively simplified.

A sixth aspect of the present disclosure is directed to a refrigeration apparatus including the features of claim 6.

Thus, an additional cooling unit such as an air-cooling fan driven by another power source is no longer necessary, and the refrigerant is effectively used to cool the inverters (24d, 25d) generating heat.

An seventh aspect of the present disclosure is an embodiment of the sixth aspect. In the seventh aspect, the refrigeration apparatus further includes a casing (61) housing the loads (92, 93) and the power source unit (10), wherein the casing (61) has an opening-closing plate capable of opening an inside of the casing (61), and the power source board (20) of the power source unit (10) is located inside the casing (61) at a position corresponding to the opening-closing plate.

This allows the maintenance worker to freely reach the power source board (20) inside the outdoor unit casing (61) from the opening-closing plate (63a), and thus improves the ease of maintenance. In particular, since the inverters (24d, 25d) of the respective power generating circuits (24, 25) are cooled with the refrigerant, the maintenance worker can detach the opening-closing plate (63a) to open the inside of the casing (61), and check whether the inverters (24d, 25d) are properly cooled.

### ADVANTAGES OF THE INVENTION

According to the aspects of the present disclosure, the power source board (20), which is a printed circuit board, can be minimized in size without significantly compromising the effect of reducing the common-mode noise.

### BRIEF DESCRIPTION OF THE DRAWINGS

[FIG. 1] FIG. 1 is a schematic view of a conventional power source board and power source unit.
[FIG. 2] FIG. 2 is a schematic view illustrating a power source board and a power source unit according to this embodiment.
[FIG. 3] FIG. 3 is a layout diagram of the power source board other than a connector.
[FIG. 4] FIG. 4 is a view illustrating a location of a power source unit to be provided in an outdoor unit according to this embodiment.
[FIG. 5] FIG. 5 is a vertical cross-sectional view of the power source unit attached to a refrigerant pipe.

### DESCRIPTION OF EMBODIMENT

An embodiment of the present invention will be described in detail with reference to the drawings. The following embodiment is merely an exemplary one in nature, and is not intended to limit the scope, applications, or use of the present invention.

### <<Embodiment>>

### <Outline>

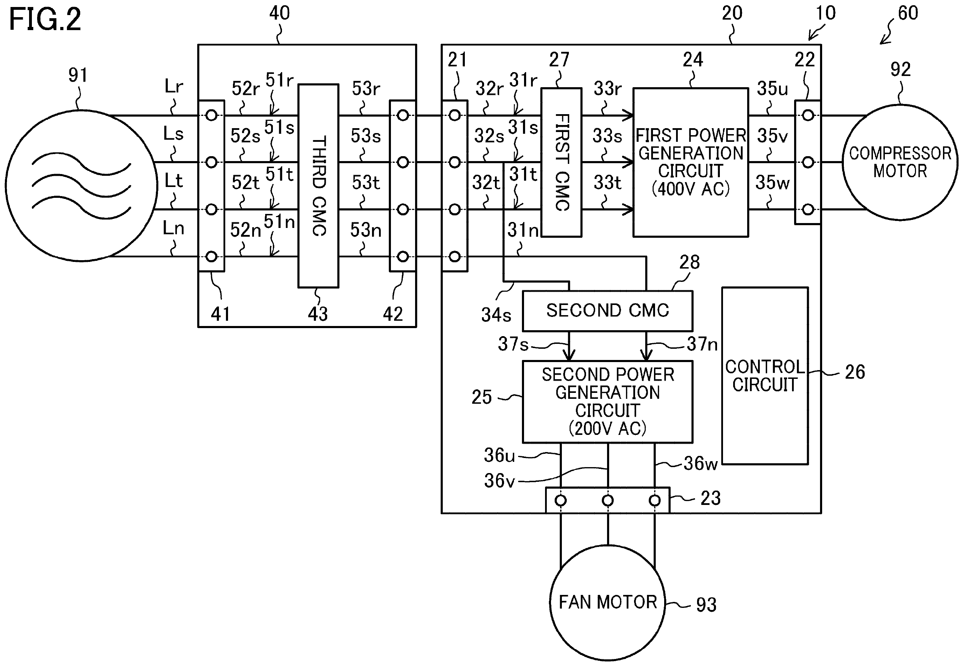

FIG. 2 schematically shows a configuration of a power source unit (10) according to the present embodiment. The power source unit (10) of this embodiment is mounted on an outdoor unit of an air conditioner (60), which is an example of a refrigeration apparatus. The power source unit (10) receives input AC power from a commercial power source (91), which is a three-phase four-wire AC power source, and supplies electric power to drive loads, which are constituent components of the air conditioner (60).

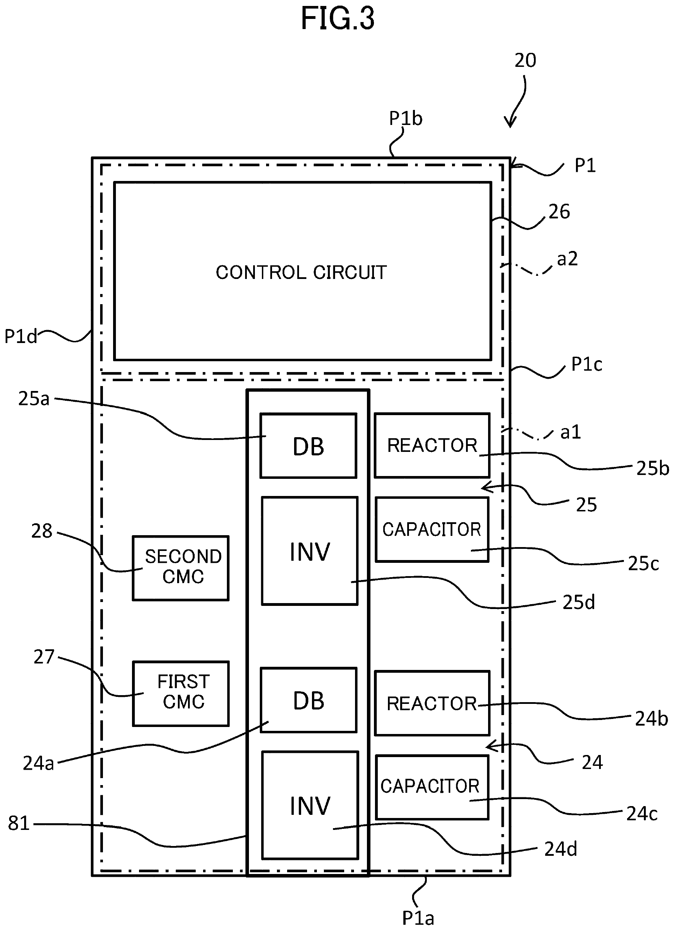

In this embodiment, the constituent components (i.e., loads) of the air conditioner (60) which receive power from the power source unit (10) include a compressor motor (92) which is a drive source of a compressor (71) (see FIG. 3), and a fan motor (93) which is a drive source of an outdoor fan (not shown).

Hence, the power source unit (10) is electrically connected not only to the commercial power source (91), but also to the compressor motor (92) and the fan motor (93). The power source unit (10) converts the input AC power from the commercial power source (91) into electric power capable of driving the compressor motor (92) and the fan motor (93), and outputs the converted electric power to each motor (92, 93). Thus, each motor (92, 93) can be driven.

### <Configuration of Power Source Unit>

As illustrated in FIG. 2, such a power source unit (10) includes two printed circuit boards, namely, a power source board (20) and a noise cancelling board (40). The power source board (20) is connected to the compressor motor (92) and the fan motor (93). The noise cancelling board (40) is connected between the power source board (20) and the commercial power source (91).

### <Configuration of Power Source Board>

The power source board (20) includes connectors (21, 22, 23), four wires (31r, 31s, 31t, 31n), a first power generation circuit (24), a second power generation circuit (25), a control circuit (26), a first common-mode choke coil (27), and a second common-mode choke coil (28). As illustrated in FIG. 3, these constituent features are mounted on a printed wiring board (PI) having a substantially rectangular shape in plan view.

Since relatively many circuits are mounted on the power source board (20) as described above, the printed wiring board (PI) to be adopted for the power source board (20) is of a four-layer structure. This can contribute to minimization of the power source board (20).

### - Connectors -

The connectors (21, 22, 23) electrically connect the power source board (20) to other devices and boards via harnesses. As illustrated in FIG. 2, the connector (21) is an input terminal connected to the noise cancelling board (40), and is connected to the commercial power source (91) via the noise cancelling board (40). The connector (22) is an output terminal connected to the compressor motor (92). The connector (23) is an output terminal connected to the fan motor (93).

Each of the connectors (21, 22, 23) has a housing made of, for example, a resin. The housing includes four metal foil pieces arranged therein and made of, for example, copper. Each of the four metal pieces corresponds to one of the R, S, and T phases and neutral point of the commercial power source (91). Each connector (21, 22, 23) is located near a corresponding end of the power source board (20) so that the harnesses are easily connected the connectors (21, 22, 23). The connectors (21, 22, 23) allow the harnesses to be detachably connected thereto.

### - Wiring -

The four wires (31r, 31s, 31t, 31n) are electrically connected to the connector (21) acting as an input terminal. The wires (31r, 31s, 31t) constitute a three-phase wire set. The wires (31r, 31s, 31t) respectively correspond to the R, S, and T phases of the three-phase four-wire commercial power source (91). The wire (31n) is a neutral point wire corresponding to the neutral point of the three-phase four-wire commercial power source (91). Although not shown in FIG. 3, these wires (31r, 31s, 31t, 31n) are formed on the printed wiring board (PI), and made of metal foil such as copper foil.

As specifically illustrated in FIG. 2, in the three-phase wire set, the wire (31r) on the R phase includes a wire (32r) and a wire (33r), and the wire (31t) on the T phase includes a wire (32t) and a wire (33t). The wires (32r, 32t) are connected at one end to the connector (21), and at the other end to the first common-mode choke coil (27). The wires (33r, 33t) are connected at one end to the other ends of the wires (32r, 32t) via the first common-mode choke coil (27), and connected at the other end to the input of the first power generation circuit (24).

The wire (31s) on the S phase includes four wires (32s, 33s, 34s, 37s). The wire (32s) in the three-phase wire set is connected at one end to the connector (21), and at the other end to the first common-mode choke coil (27). The wire (33s) is connected at one end to the other end of the wire (32s) via the first common-mode choke coil (27), and connected at the other end to the input of the first power generation circuit (24). The wire (34s) is a wire branched from the wire (32s). The wire (34s) is connected at one end to the wire (32s) and at the other end to the second common-mode choke coil (28). The wire (37s) is connected at one end to the second common-mode choke coil (28) and at the other end to the input of the second power generation circuit (25).

The neutral point wire (31n) is connected at one end to the connector (21) and at the other end to one end of a wire (37n) via the second common-mode choke coil (28). The wire (37n) is connected at the other end to the input of the second power generation circuit (25).

### - First Power Generation Circuit -

The first power generation circuit (24) generates three-phase first output power based on the input AC power from the commercial power source (91).

As illustrated in FIG. 3, the first power generation circuit (24) is a power conversion circuit including a converter (24a) using a diode bridge, a reactor (24b), a capacitor (24c), and an inverter (24d). The input AC power from the commercial power source (91) is rectified by the converter (24a), smoothed by the capacitor (24c), and then converted by the inverter (24d) into AC power having a desired frequency and amplitude. In FIG. 2, the converted AC power is output as first output power to the compressor motor (92) via output wires (35u, 35v, 35w) and the connector (22).

This embodiment shows as an example using an AC power source which outputs the first output power of approximately 400 V.

### - Second Power Generation Circuit -

The second power generation circuit (25) generates single-phase second output power based on the input AC power from the commercial power source (91).

As illustrated in FIG. 3, the second power generation circuit (25) is, similar to the first power generation circuit (24), a power conversion circuit including a converter (25a) using a diode bridge, a reactor (25b), a capacitor (25c), and an inverter (25d). The second power generation circuit (25) generates the second output power in a manner similar to the first power generation circuit (24). The second output power, which is the AC power converted by the second power generation circuit (25), is output to the fan motor (93) via output wires (36u, 36v, 36w) and the connector (23).

In this embodiment, the second output power is different from the first output power, and an example using an AC power source which outputs the second output power of approximately 200 V will be described. That is, in the present embodiment, the second output power is smaller than the first output power.

### - Control Circuit -

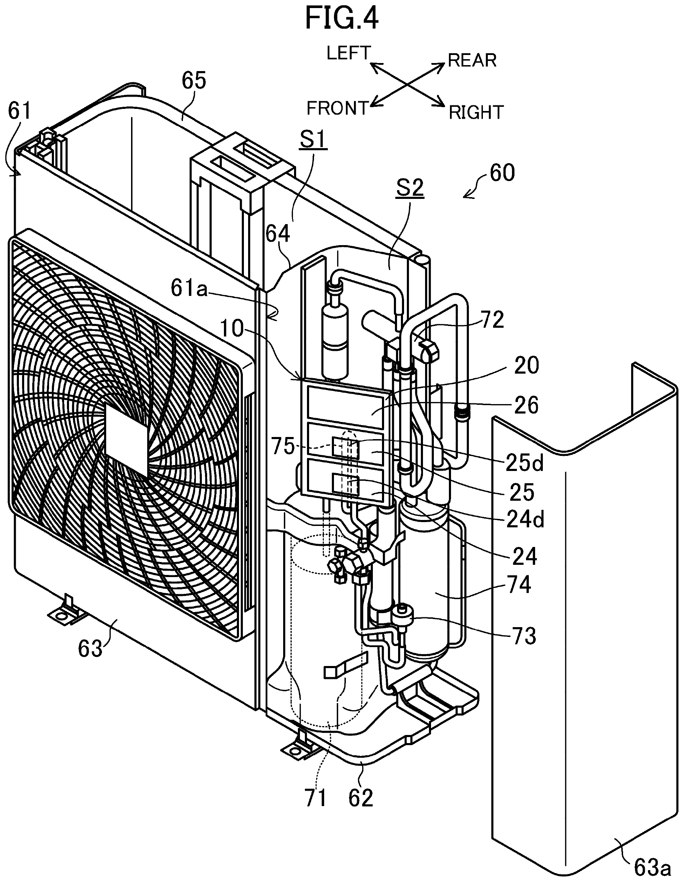

The control circuit (26) includes low-voltage components such as a memory and a CPU. The CPU reads and executes a program stored in the memory, so that the control circuit (26) controls the refrigerant of the air conditioner (60) equipped with the power source unit (10). The refrigerant control includes a switching control of a four-way switching valve (72) shown in FIG. 4.

Note that the control circuit (26) may control a power generation operation of each of the power generation circuits (24, 25), and the number of rotations of each of the motors (92, 93) acting as loads. For example, inverters (24d, 25d) in the power generation circuits (24, 25) include a plurality of switching elements. These switching elements are repeatedly turned ON and OFF at an appropriate time point to generate power to be output. The control circuit (26) may control ON and OFF of the switching elements.

Hence, this embodiment shown in FIG. 2 includes the control circuit (26) provided not on the noise cancelling board (40) but on the power source board (20), unlike the example shown in FIG. 1.

### - First Common-Mode Choke Coil -

The first common-mode choke coil (27) is a three-wire common-mode choke coil including one core material (for example, a ferrite core) wound with three conductive wires. Hence, the first common-mode choke coil (27) has six terminals.

As illustrated in FIG. 2, the first common-mode choke coil (27) is connected to the three-phase wire set (31r, 31s, 31t) between the connector (21) and the first power generation circuit (24) That is, each of the three conductive wires of the first common-mode choke coil (27) has one end connected to the other end of a corresponding one of the wires (32r, 32s, 32t) of the three-phase wire set (31r, 31s, 31t). Each of the three conductive wires of the first common-mode choke coil (27) has the other end connected to one end of a corresponding one of the wires (33r, 33s, 33t) of the three-phase wire set (31r, 31s, 31t).

This first common-mode choke coil (27) reduces common-mode noise of the input AC power to be supplied to the first power generation circuit (24) via the three-phase wire set (31r, 31s, 31t).

### - Second Common-Mode Choke Coil -

The second common-mode choke coil (28) is a single-phase common-mode choke coil; that is, a two-wire common-mode choke coil. The second common-mode choke coil (28) includes one core material (for example, a ferrite core) wound with two conductive wires. Hence, the second common-mode choke coil (28) has four terminals.

The second common-mode choke coil (28) is connected to a predetermined wire (here, the wire (31s) on the S phase) on one phase in the three-phase wire set (31r, 31s, 31t) and to the neutral point wire (31n) between the connector (21) and the second power generation circuit (25). That is, one of the two conductive wires of the second common-mode choke coil (28) has one end connected to the other end of the wire (34s) branched from the wire (31s) on the S phase, and the other conductive wire has one end connected to the other end of the neutral point wire (31n). The other ends of the two conductive wires are connected to the second power generation circuit (25) via the wires (37s, 37n).

This second common-mode choke coil (28) reduces common-mode noise of the input AC power to be supplied to the second power generation circuit (25) via the wire (31s) on the S phase and the neutral point wire (31n).

As can be seen, the power source board (20) uses the three-wire first common-mode choke coil (27) and the two-wire second common-mode choke coil (28) in combination. Since the first output power is higher than the second output power, the first power generation circuit (24) is interpreted to handle a higher voltage than the second power generation circuit (25) does. Hence, the first common-mode choke coil (27) corresponding to the first power generation circuit (24) is higher in noise canceling capability or larger in coil size than the second common-mode choke coil (28) corresponding to the second power generation circuit (25) is. That is, the noise canceling capability and coil size of each of the common-mode choke coils (27, 28) vary depending on the output power of the corresponding one of the power generation circuits (24, 25). Specifically, the noise cancelling capability and coil size of each of the common-mode choke coils (27, 28) increase with the increase in the output power of the corresponding one of the power generation circuits (24, 25).

Hence, the present embodiment does not need to employ a wiring pattern in which the wires are needlessly routed around to avoid all the three-phase wire set (31r, 31s, 31t) and the neutral point wire (31n) from running in parallel on the printed wiring board (PI). Instead, the pattern of the three-phase wire set (31r, 31s, 31t) and the neutral point wire (31n) is naturally determined so that all these wires do not in parallel very much. This allows each common-mode choke coil (27, 28) to reduce the common-mode noise, and in addition, can reduce the generation of the common-mode noise itself due to parallel running of the three-phase wire set (31r, 31s, 31t) and the neutral point wire (31n).

### <Layout on Power Source Board>

Described here with reference to FIG. 3 is a layout of various circuits (24, 25, 26) and components (27, 28) mounted on the power source board (20). In FIG. 3, the connectors (21 to 23) and wires mounted on the printed wiring board (PI) are not shown.

As described above, the printed wiring board (PI) has a rectangular shape in plan view. That is, the printed wiring board (PI) is a rectangular flat plate including: a first short side (P1a) (corresponding to a first side); a second short side (P1b) (corresponding to a second side) facing the first short side (P1a); a first long side (P1c) extending from the first short side (P1a) toward the second short side (P1b); and a second long side (P1d) facing the first long side (P1c).

In plan view, the printed wiring board (PI) has a high-voltage region (a1) and a low-voltage region (a2) between the first short side (P1a) and the second short side (P1b). The high-voltage region (a1) occupies a half or more (approximately two third in FIG. 3) of a surface area of the printed wiring board (PI) from the first short side (P1a). The high-voltage region is provided with relatively high-voltage components. The low-voltage region (a2) is located closer to the second short side (P1b) than the high-voltage region (a1) is, and placed next to the high-voltage region (a1). The low-voltage region (a2) occupies the rest of the area (approximately one third in FIG. 3) of the surface area of the printed wiring board (P1) from the second short side (P1b). The low-voltage region is provided with relatively low-voltage components.

In this embodiment, the 400 V AC first power generation circuit (24) and the 200 V AC second power generation circuit (25) described above are mounted in the high-voltage region (a1). In particular, the 400 V AC first power generation circuit (24) is located closer to the first short side (P1a) than the 200 V AC second power generation circuit (25) is. The control circuit (26) described above is mounted in the low-voltage region (a2).

That is, the printed wiring board (PI) is provided with the 400 V AC first power generation circuit (24), the 200 V AC second power generation circuit (25), and the control circuit (26) arranged in the stated order from the first short side (P1a) toward the second short side (P1b) along the first and second long sides (P1c, P1d). The first power generation circuit (24) for the highest voltage and the control circuit (26) for the lowest voltage are not arranged side by side, but are spaced apart from each other with the second power generation circuit (25) for an intermediate electric potential interposed between the first power generation circuit (24) and the control circuit (26). Hence, a low-voltage component mounted on the low-voltage region (a2) is less affected by noise from a high-voltage component included in the first power generation circuit (24).

The first common-mode choke coil (27) and the second common-mode choke coil (28) are mounted in the high-voltage region (a1). In particular, the second common-mode choke coil (28) is located closer to the low-voltage region (a2) than the first common-mode choke coil (27) is. That is, the second common-mode choke coil (28) is located relatively close to the second power generation circuit (25) corresponding to the second common-mode choke coil (28), and the first common-mode choke coil (27) is located relatively closer to the first power generation circuit (24) corresponding to the first common-mode choke coil (27). Hence, the three-phase wire set (31r, 31s, 31t) and the neutral point wire (31n) between the common-mode choke coils (27, 28) and the corresponding power generation circuits (24,25) can be routed as simply as possible, without routing the wires needlessly.

### <Noise Cancelling Board>

As illustrated in FIG. 2, the noise cancelling board (40) includes two connectors (41, 42), four wires (51r, 51s, 51t, 51n), and a single third common-mode choke coil (43). These constituent features are mounted on a printed wiring board shaped into a substantially rectangular flat plate separated from the above power source board (20).

The number of circuits (components) to be mounted on the noise cancelling board (40) is relatively smaller than the number of circuits (components) to be mounted on the power source board (20). Thus, the noise cancelling board (40) is a printed circuit board of two-layer structure having fewer layers than the power source board (20) has. Such a feature can reduce the cost of the noise cancelling board (40).

### - Connectors -

The connectors (41, 42) electrically connect the noise cancelling board (40) to the commercial power source (91) and to the power source board (20) via harnesses. The connector (41) is an input terminal to be connected to the commercial power source (91), and the connector (42) is an output terminal to be connected to the power source board (20).

Similar to the connectors (21, 22, 23) of the power source board (20), each of the connectors (41, 42) has a housing made of, for example, a resin. The housing includes four metal foil pieces arranged therein and made of, for example, copper. Each of the four metal pieces corresponds to one of the R, S, and T phases and neutral point of the commercial power source (91). Each connector (41, 42) is located near a corresponding end of the noise cancelling board (40) so that the harnesses outside the noise cancelling board (40) are easily connected the connector (41, 42).

The connectors (41, 42) allow the harnesses to be detachably connected thereto. Thus, at the installation of the power source unit (10), a user can select options of installing the noise cancelling board (40) in a situation where strict standards are imposed for countermeasures against EMI, or installing no noise cancelling board in a situation where the standards for the countermeasures against EMI are less strict. When the noise cancelling board (40) is not installed, the harnesses (Lr, Ls, Lt, Ln) extending from the commercial power source (91) are directly connected to the connector (21) of the power source board (20).

### - Wiring -

The four wires (51r, 51s, 51t, 51n) are electrically connected to the connector (41). The wires (51r, 51s, 51t) constitute a three-phase wire set. The wires (51r, 51s, 51t) respectively correspond to the R, S, and T phases of the three-phase four-wire commercial power source (91). The wire (51n) corresponds to a neutral point of the three-phase four-wire commercial power source (91). These wires (51r, 51s, 51t, 51n) are formed on the printed wiring board (P1) and made of metal foil such as copper foil.

Specifically, the wires (52r, 52s, 52t, 52n) respectively include wires (52r, 52s, 52t, 52n) and wires (53r, 53s, 53t, 53n). The wires (52r, 52s, 52t, 52n) are connected at one end to the connector (41), and at the other end to the third common-mode choke coil (43). The wires (53r, 53s, 53t, 53n) are connected at one end to the third common-mode choke coil (43), and at the other end to the connector (42).

### - Third Common-Mode Choke Coil -

The third common-mode choke coil (43) is a four-wire common-mode choke coil including one core material (for example, a ferrite core) wound with four conductive wires. Hence, the third common-mode choke coil (43) has eight terminals.

The third common-mode choke coil (43) is connected between the two connectors (41, 42), i.e., between the commercial power source (91) and the power source board (20). The third common-mode choke coil (43) reduces common-mode noise of the input AC power from the commercial power source (91). Hence, each of the first and second common-mode choke coils (27, 28) of the power source board (20) receives, via the third common-mode choke coil (43) of the noise cancelling board (40), the input AC power that has the common-mode noise reduced to some degree.

Note that the four conductive wires of the third common-mode choke coil (43) are not particularly long. For example, the four conductive wires are substantially as long as the wires of the first common-mode choke coil (27) and the second common-mode choke coil (28).

### <Location of Power Source Unit in Air Conditioner>

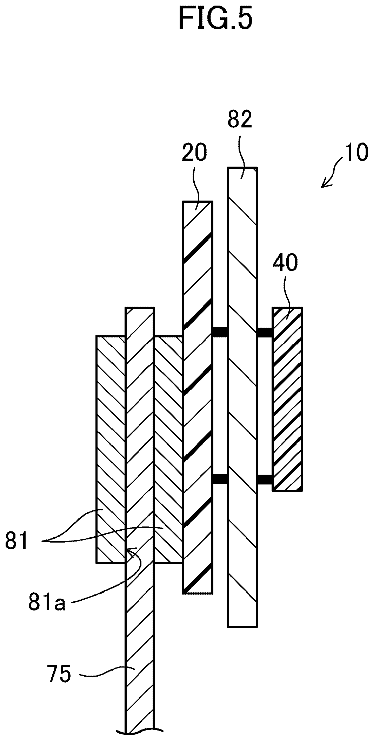

The power source unit (10) is included in an outdoor unit of the air conditioner (60). Here, a location of the power source unit (10) to be provided in the outdoor unit of the air conditioner (60) will be described with reference to FIGS. 4 and 5.

In the statements "front," "rear," "left," and "right" to be used below mean the directions shown in FIG. 4, unless otherwise specified.

As described above, the power source unit (10) includes the power source board (20) and the noise cancelling board (40). For example, each of the inverters (24d, 25d) respectively provided to the power generation circuits (24, 25) of the power source board (20) includes a plurality of switching elements serving as power elements. While the power generation circuits (24, 25) are being driven, a relatively large current flows through the switching elements. Hence, the inverters (24d, 25d) generate heat. In order to reduce the risk of thermal damage on components, and peripheral components, of the inverters (24d, 25d), the inverters (24d, 25d) need to be cooled.

The converters (24a, 25a) including a plurality of diodes generate heat due to a large current flowing through the diodes. Hence, in one preferred embodiment, the converters (24a, 25a) are also cooled.

In contrast, as illustrated in FIG. 4, the power source board (20) of the present application is attached to a refrigerant pipe (75) (corresponding to a cooling unit) included in the outdoor unit of the air conditioner (60).

Specifically, the outdoor unit of the air conditioner (60) includes the power source unit (10), an outdoor unit casing (61) (corresponding to a casing), and the refrigerant pipe (75) corresponding to the cooling unit.

The outdoor unit casing (61) is a box made of a steel plate formed into a substantially rectangular parallelepiped shape, and houses, for example, the power source unit (10), and various motors (92, 93) which are loads of the power source unit (10). The outdoor unit casing (61) includes a bottom plate (62), and a side plate (63) standing on the bottom plate (62). Although not shown in FIG. 3, the outdoor unit casing (61) also has a top plate attached to an upper end of the side plate (63).

The outdoor unit casing (61) is provided with a partition plate (64) standing on the bottom plate (62) and extending rearward from the side plate (63) serving as a front plate of the outdoor unit casing (61). The partition plate (64) is formed in a substantial V-shape in plan view, and partitions an internal space of the outdoor unit casing (61) into a fan chamber (S1) on the left and a machine chamber (S2) on the right. The fan chamber (S1) includes therein an outdoor heat exchanger (65) extending substantially in the shape of L in plan view from a left face to rear face of the side plate (63), the fan motor (93), and an outdoor fan (not shown) driven by the fan motor (93). The machine chamber (S2) houses therein the compressor (71) placed on the bottom plate (62), the four-way switching valve (72) located above the compressor (71), an expansion valve (73) and an accumulator (74) located near the compressor (71), and the power source unit (10) of this embodiment. Note that the compressor (71) includes the compressor motor (92).

The side plate (63) of the outdoor unit casing (61) has a right part (63a) which defines the machine chamber (S2), and is detachable from the remaining part of the outdoor unit casing (61) as illustrated in FIG. 3. When the outdoor unit of the air conditioner (60) requires maintenance, a maintenance worker can remove the right part (63a) and reach the devices inside the machine chamber (S2). Hence, removing the right part (63a) exposes the inside of the outdoor unit casing (61) corresponding to the right part (63a), namely, the machine chamber (S2). Accordingly, the right part (63a) of the side plate (63) corresponds to an opening-closing plate that can open the inside of the outdoor unit casing (61).

Note that the compressor (71), the four-way switching valve (72), the outdoor heat exchanger (65), the expansion valve (73), and the accumulator (74) are constituent devices of the refrigerant circuit. These constituent devices are connected via the refrigerant pipe (75) to form a refrigerant circuit in which the refrigerant circulates.

With the right part (63a) attached to the remaining part of the outdoor unit casing (61), the power source unit (10) including the power source board (20) in the outdoor unit casing (61) is located at a position corresponding to the right part (63a) and above the compressor (71) when attached to the refrigerant pipe (75).

FIG. 5 is a diagram simply illustrating a vertical cross section of the power source unit (10) attached to the refrigerant pipe (75). As illustrated in FIG. 5, the power source board (20) has a surface, a portion of which corresponds to functional units that generate heat, such as the converters (24a, 25a) and the inverters (24d, 25d). To the portion of the surface, a radiator (81) which is rectangular when viewed in plan and made of copper, for example, is fastened with screws. More specifically, as illustrated in FIG. 3, the converters (24a, 25a) and the inverters (24d, 25d), which are heat generating functional units, are arranged in line along the long sides (P1c, P1d) of the power source board (20). Thus, the radiator (81) is arranged to cover the front sides of the heat-generating functional units. The rear surface of the power source board (20) is fastened to one of faces of a flat sheet metal (82) with, for example, screws. The noise cancelling board (40) is fastened with, for example, screws to the other face of the sheet metal (82). As an example, the power source unit (10) having such a configuration is attached to the refrigerant pipe (75) with the refrigerant pipe (75) passing through a pipe-receiving groove (81a) formed inside the radiator (81) along the longitudinal direction of the radiator (81).

This allows the inverters (24d, 25d) to dissipate heat into the machine chamber (S2), in particular into the refrigerant flowing through the refrigerant pipe (75), via the radiator (81) and the sheet metal (82). Thus, the inverters (24d, 25d) are cooled. Therefore, the present embodiment allows the refrigerant to be effectively used as a means to cool the inverters (24d, 25d), and requires no additional cooling means such as an air-cooling fan.

Moreover, as described above, the power source unit (10) is provided at a position corresponding to the detachable right part (63a) of the side plate (63) Hence, simply detaching the right part (63a) allows the maintenance worker to attach and detach the power source unit (10) to and from the refrigerant pipe (75), and check whether the power source unit (10) is attached to the refrigerant pipe (75).

### <Advantages>

The power source board (20) of this embodiment is provided with not a four-wire common-mode choke coil, but the three-wire first common-mode choke coil (27) corresponding to the first power generation circuit (24), and the single-phase common-mode choke coil (28), which is the two-wire common-mode choke coil corresponding to the second power generation circuit (25). The first common-mode choke coil (27) is connected to the three-phase wire set (31r, 31s, 31t) between the connector (21) and the first power generation circuit (24). Between the connector (21) and the second generation circuit (25), the second common-mode choke coil (28) is connected to the neutral point wire (31n) and the wire (31s) on the S phase in the three-phase wire set (31r, 31s, 31r).

The combined size of the first common-mode choke coil (27) and the second common-mode choke coil (28) is smaller than one four-wire common-mode choke coil. Furthermore, the common-mode choke coils (27, 28) having the above wiring structure achieve substantially the same advantageous effects in reducing the common-mode noise as the four-wire common-mode choke coil. The common-mode choke coils (27, 28), which are three-wire and two-wire coils, respectively, are relatively small in size. Therefore, the coils (27, 28) are easily arranged in an available space on the power source board (20), increasing the flexibility of a layout for the three-phase wire set (31r, 31s, 31t) and the neutral point wire (31n). This can minimize the power source board (20), which is a printed circuit board, without significantly compromising the effect of reducing the common-mode noise. Such features can contribute to the reduction in manufacturing costs of the power source board (20).

Moreover, on the printed wiring board (PI) of the power source board (20), the first power generation circuit (24) generating higher power than the second power generation circuit (25), the second power generation circuit (25), and the control circuit (26) in the low-voltage region (a2) are arranged in the stated order. That is, since the first power generation circuit (24) is away from the low-voltage region (a2), a low-voltage component in the low-voltage region (a2) is less affected by the noise from high-voltage components of the first power generation circuit (24). The second common-mode choke coil (28) is located closer to the low-voltage region (a2) than the first common-mode choke coil (27) is. That is, the second common-mode choke coil (28) is located relatively close to the second power generation circuit (25) corresponding to the second common-mode choke coil (28), and the first common-mode choke coil (27) is located relatively closer to the first power generation circuit (24) corresponding to the first common-mode choke coil (27). This allows the three-phase wire set (31r, 31s, 31t) and the neutral point wire (31n) between the common-mode choke coils (27, 28) and the corresponding power generation circuits (24, 25) to be routed as simply as possible.

In the present embodiment, the first power generation circuit (24) outputs the first output power to the compressor motor (92) included in the air conditioner (60). The second power generation circuit (25) outputs the second output power to the fan motor (93) also included in the air conditioner (60).

Furthermore, the power source unit (10) of this embodiment includes the noise cancelling board (40) having the four-wire third common-mode choke coil (43) in addition to the power source board (20) provided with the three-wire first common-mode choke coil (27) and the two-wire second common-mode choke coil (28). When the noise cancelling board (40) is connected to the power source board (20), the common-mode noise is reduced more effectively than when the power source board (20) alone is connected. Thus, for example, in a situation where relatively strict standards are imposed on countermeasures against EMI, the effect of reducing the common-mode noise can be changed, e.g., with the noise cancelling board (40) connected to the power source board (20), depending on the environment in which the power source unit (10) is installed.

Moreover, the noise cancelling board (40) is provided separately from the power source board (20). Hence, the noise cancelling board (40) can have a different number of layers from the power source board (20), e.g., two layers relative to the four layers of the power source board (20). This can further reduce the production costs than in the case where the noise cancelling board (40) is designed to have four layers just like the power source board (20). In addition, since the noise cancelling board (40) carries a single four-wire third common-mode choke coil (43), the circuit configuration of the noise cancelling board (40) is relatively simplified.

Furthermore, in this embodiment, the refrigerant in the air conditioner (60) cools the inverters (24d, 25d) of the first and second power generation circuits (24, 25). Thus, an additional cooling unit such as an air-cooling fan driven by another power source is no longer necessary, and the refrigerant is effectively used to cool the inverters (24d, 25d) generating heat.

Moreover, the power source board (20) of this embodiment is arranged in the outdoor unit casing (61) at a position corresponding to the detachable right part (63a) of the side plate (63). This allows the maintenance worker to freely reach the power source board (20) inside the outdoor unit casing (61) from the right part (63a), and thus improves the ease of maintenance. In particular, since the inverters (24d, 25d) of the respective power generating circuits (24, 25) are cooled with the refrigerant, the maintenance worker can detach the right part (63a) to open the inside of the casing (61), and check whether the inverters (24d, 25d) are properly cooled.

The power source unit (10) may be mounted on an apparatus other than a refrigeration apparatus including an air conditioner. When mounted on a refrigeration apparatus, the power source unit (10) may be provided in an indoor unit instead of an outdoor unit.

The load of the power source unit (10) may be any device as long as it receives power from the power source unit (10), and is not limited to a combination of the compressor motor (92) and the fan motor (93). The number of loads in the power source unit (10) is not limited to two.

When the power source unit (10) is mounted on the refrigerating apparatus, the cooling unit is not limited to the refrigerant pipe (75). Any given cooling unit may be used as far as the cooling unit can cool the heat-generating functional units such as the inverters (24d, 25d). Examples of the cooling unit may include an air-cooling fan, and a cooling unit using water instead of a refrigerant.

Furthermore, depending on the amount of heat generated by the heat-generating functional units, the cooling unit may be omitted.

The location of the power source unit (10) is not limited to the one illustrated in FIG. 4.

In the above embodiment, the noise cancelling board (40) is provided between the commercial power source (91) and the power source board (20), but the noise cancelling board (40) is not essential. As already described, the noise cancelling board (40) may be omitted in a situation where countermeasures against EMI are unnecessary. In this case, too, the heat-generating functional units such as the inverters (24d, 25d) may be cooled with the refrigerant pipe (75) or another means as can be seen in the above embodiment. Even if the noise cancelling board (40) is not provided, the location of the power source board (20) is not limited to the one illustrated in FIG. 4.

The first power generation circuit (24) is not limited to a 400 V AC circuit. Similarly, the second power generation circuit (25) is not limited to a 200 V AC circuit.

The inverters (24d, 25d) that have been mounted on the power source board (20) may be installed in the motors (92, 93), which are loads.

On the noise cancelling board (40), a single three-wire common-mode choke coil and a single two-wire (single phase) common-mode choke coil may replace the single four-wire third common-mode choke coil (43).

### INDUSTRIAL APPLICABILITY

As can be seen, the present invention can advantageously minimize the power source board (20) without significantly compromising the effect of reducing the common-mode noise, and is useful for downsizing a housing of a refrigeration apparatus, for example.

### DESCRIPTION OF REFERENCE CHARACTERS

- 10: Power Source Unit
- 20: Power Source Board
- 21: Connector (Input Terminal)
- 24: First Power Generation Circuit
- 25: Second Power Generation Circuit
- 27: First Common-Mode Choke Coil
- 28: Second Common-Mode Choke Coil
- 31r, 31s, 31t: Three-Phase Wire Set
- 31n: Neutral Point Wire
- 40: Noise Cancelling Board
- 43: Third Common-Mode Choke Coil
- 60: Air Conditioner (Refrigeration Apparatus)
- 61: Outdoor Unit Casing (Casing)
- 63a: Right Part of Side Plate (Opening-Closing Unit)
- 75: Refrigerant Pipe (Cooling Unit)
- 91: Commercial Power Source (AC Power Source)
- 92: Compressor Motor
- 93: Fan Motor
- P1: Printed Wiring Board
- a1: High-Voltage Region
- a2: Low-Voltage Region

## Claims

1. A power source board (20) configured to supply a plurality of loads (92, 93) with different levels of power, the power source board (20), comprising:
an input terminal (21) connected to a three-phase four-wire AC power source (91);
a three-phase wire set (31r, 31s, 31t) and a neutral point wire (31n) which are in conduction with the input terminal (21);
a first power generation circuit (24) configured to generate three-phase first output power based on input AC power from the AC power source (91);
a second power generation circuit (25) configured to generate single-phase second output power based on the input AC power; **characterized by**
a three-wire first common-mode choke coil (27) connected to the three-phase wire set (31r, 31s, 31t) between the input terminal (21) and the first power generation circuit (24), the first common-mode choke coil (27) being configured to reduce a common-mode noise component of the input AC power to be supplied to the first power generation circuit (24) via the three-phase wire set (31r, 31s, 31t); and
a two-wire second common-mode choke coil (28) connected to a predetermined wire (31s) on one phase in the three-phase wire set (31r, 31s, 31t) and to the neutral point wire (31n) between the input terminal (21) and the second power generation circuit (25), the second common-mode choke coil (28) being configured to reduce a common-mode noise component of the input AC power to be supplied to the second power generation circuit (25) via the predetermined wire (31s) and the neutral point wire (31n);
the power source board (20) further comprising:
a printed wiring board (PI) on which the first power generation circuit (24), the second power generation circuit (25), the first common-mode choke coil (27) and the second common-mode choke coil (28) are mounted, wherein
the printed wiring board (PI) has a quadrangular shape in plan view,
the printed wiring board (PI) has, in plan view, a first side (P1a) and a second side (P1b) facing the first side (P1a),
the printed wiring board (PI) has a high-voltage region (a1) and a low-voltage region (a2) between the first side (P1a) and the second side (P1b), the high-voltage region (a1) including the first power generation circuit (24) and the second power generation circuit (25) mounted thereon so that the first power generation circuit (24) is located closer to the first side (P1a) than the second power generation circuit (25) generating the second output power smaller than the first output power, the low-voltage region (a2) being located closer to the second side (P1b) than the high-voltage region (a1) is, and
the first common-mode choke coil (27) and the second common-mode choke coil (28) are mounted on the high-voltage region (a1) so that the second common-mode choke coil (28) is located closer to the low-voltage region (a2) than the first common-mode choke coil (27) is.

2. The power source board (20) of claim 1, wherein
the loads (92, 93) include a compressor motor (92) and a fan motor (93) of a refrigeration apparatus (60),
the first power generation circuit (24) is configured to output the first output power to the compressor motor (92), and
the second power generation circuit (25) is configured to output the second output power to the fan motor (93).

3. A refrigeration apparatus (60) having a refrigerant circuit, the refrigeration apparatus (60) comprising:
the power source board (20) of claims 1 or 2; and
a cooling unit (75) configured to cool inverters (24d, 25d) respectively included in the first and second power generation circuits (24, 25) of the power source board (20) with a refrigerant used in the refrigerant circuit.

4. The refrigeration apparatus (60) of claim 3, further comprising
a casing (61) housing the loads (92, 93) and the power source board (20), wherein
the casing (61) has an opening-closing plate capable of opening an inside of the casing (61), and
the power source board (20) is located inside the casing (61) at a position corresponding to the opening-closing plate.

5. A power source unit (10) comprising:
the power source board (20) of any one of claims 1 or 2; and
a noise cancelling board (40) connected between the AC power source (91) and the power source board (20), wherein
the noise cancelling board (40) includes a four-wire third common-mode choke coil (43) configured to reduce a common-mode noise component of the input AC power, and
the first and second common-mode choke coils (27, 28) of the power source board (20) are supplied with the input AC power via the third common-mode choke coil (43) of the noise cancelling board (40).

6. A refrigeration apparatus (60) configured to have a refrigerant circuit, the refrigeration apparatus (60) comprising:
the power source unit (10) of claim 5; and
a cooling unit (75) configured to cool inverters (24d, 25d) respectively included in the first and second power generation circuits (24, 25) of the power source board (20) of the power source unit (10) with a refrigerant used in the refrigerant circuit.

7. The refrigeration apparatus (60) of claim 6, further comprising
a casing (61) housing the loads (92, 93) and the power source unit (10), wherein
the casing (61) has an opening-closing plate capable of opening an inside of the casing (61), and
the power source board (20) of the power source unit (10) is located inside the casing (61) at a position corresponding to the opening-closing plate.

## Patentansprüche

1. Stromquellenplatine (20), die ausgelegt ist, um eine Vielzahl von Lasten (92, 93) mit unterschiedlichen Leistungspegeln abzugeben, wobei die Stromquellenplatte (20) Folgendes umfasst:
eine Eingangsklemme (21), die mit einer vieradrigen Dreiphasen-Wechselstromstromquelle (91) verbunden ist;
einen dreiphasigen Leitungssatz (31r, 31s, 31t) und eine Sternpunktleitung (31n), die mit der Eingangsklemme (21) in Leitung sind;
eine erste Stromerzeugungskreislauf (24), die ausgelegt ist, um basierend auf Eingangswechselstromleistung von der Wechselstromstromquelle (91) dreiphasige erste Ausgabeleistung zu erzeugen;
eine zweite Stromerzeugungskreislauf (25), die ausgelegt ist, um basierend auf der Eingangswechselstromleistung einphasige zweite Ausgabeleistung zu erzeugen; **gekennzeichnet durch**
eine dreiadrige erste Gleichtaktdrosselspule (27), die mit dem dreiphasigen Leitungssatz (31r, 31s, 31t) zwischen der Eingangsklemme (21) und der ersten Stromerzeugungskreislauf (24) verbunden ist, wobei die erste Gleichtaktdrosselspule (27) ausgelegt ist, um eine Gleichtaktstörkomponente der Eingangswechselstromleistung, die über den dreiphasigen Leitungssatz (31r, 31s, 31t) an die erste Stromerzeugungskreislauf (24) abgegeben werden soll, zu verringern; und
eine zweiadrige zweite Gleichtaktdrosselspule (28), die mit einer vorbestimmten Leitung (31s) an einer Phase im dreiphasigen Leitungssatz (31r, 31s, 31t) und mit der Sternpunktleitung (31n) zwischen der Eingangsklemme (21) und der zweiten Stromerzeugungskreislauf (25) verbunden ist, wobei die zweite Gleichtaktdrosselspule (28) ausgelegt ist, um eine Gleichtaktstörkomponente der Eingangswechselstromleistung, die über die vorbestimmten Leitung (31 s) und die Sternpunktleitung (31 n) an die zweite Stromerzeugungskreislauf (25) angegeben werden soll, zu verringern;
wobei die Stromquellenplatine (20) weiter Folgendes umfasst:
eine gedruckte Leiterplatte (P1), auf der die erste Stromerzeugungskreislauf (24), die zweite Stromerzeugungskreislauf (25), die erste Gleichtaktdrosselspule (27) und die zweite Gleichtaktdrosselspule (28) montiert sind, wobei
die gedruckte Leiterplatte (P1) in der Draufsicht eine rechteckige Form aufweist,
die gedruckte Leiterplatte (P1) in der Draufsicht eine erste Seite (P1a) und eine zweite Seite (P1b), die zu der ersten Seite (P1a) zeigt, aufweist,
die gedruckte Leiterplatte (P1) zwischen der ersten Seite (P1a) und der zweiten Seite (P1b) einen Hochspannungsbereich (a1) und einen Niederspannungsbereich (a2) aufweist, wobei der Hochspannungsbereich (a1) darauf montiert die erste Stromerzeugungskreislauf (24) und die zweite Stromerzeugungskreislauf (25) einschließt, sodass die erste Stromerzeugungskreislauf (24) näher an der ersten Seite (P1a) gelegen ist als die zweite Stromerzeugungskreislauf (25), die die zweite Ausgabeleistung erzeugt, die niedriger ist als die erste Ausgabeleistung, und der Niederspannungsbereich (a2) näher an der zweiten Seite (P1b) gelegen ist als der Hochspannungsbereich (a1), und
die erste Gleichtaktdrosselspule (27) und die zweite Gleichtaktdrosselspule (28) in dem Hochspannungsbereich (a1) so montiert sind, dass die zweite Gleichtaktdrosselspule (28) näher an dem Niederspannungsbereich (a2) gelegen ist als die erste Gleichtaktdrosselspule (27).

2. Stromquellenplatine (20) nach Anspruch 1, wobei
die Lasten (92, 93) einen Kompressormotor (92) und einen Gebläsemotor (93) einer Kühleinrichtung (60) einschließen,
die erste Stromerzeugungskreislauf (24) ausgelegt ist, um die erste Ausgabeleistung an den Kompressormotor (92) auszugeben, und
die zweite Stromerzeugungskreislauf (25) ausgelegt ist, um die zweite Ausgabeleistung an den Gebläsemotor (93) auszugeben.

3. Kühleinrichtung (60), die einen Kühlkreis aufweist, wobei die Kühleinrichtung (60) Folgendes umfasst:
die Stromquellenplatine (20) nach Anspruch 1 oder 2; und
eine Kühleinheit (75), die ausgelegt ist, um Wechselrichter (24d, 25d) zu kühlen, die jeweils in der ersten und zweiten Stromerzeugungskreislauf (24, 25) der Stromquellenplatine (20) eingeschlossen sind, während in dem Kühlkreis ein Kältemittel verwendet wird.

4. Kühleinrichtung (60) nach Anspruch 3, weiter umfassend
ein Gehäuse (61), in dem die Lasten (92, 93) und die Stromquellenplatine (20) aufgenommen sind, wobei
das Gehäuse (61) eine öffnende-schließende Platte aufweist, die fähig ist, ein Inneres des Gehäuses (61) zu öffnen, und
die Stromquellenplatine (20) im Inneren des Gehäuses (61) an einer der öffnenden-schließenden Platte entsprechenden Position gelegen ist.

5. Stromquelleneinheit (10), umfassend:
Stromquellenplatine (20) nach einem der Ansprüche 1 oder 2; und
eine Geräuschunterdrückungsplatine (40), die zwischen der Wechselstromstromquelle (91) und der Stromquellenplatine (20) verbunden ist, wobei
die Geräuschunterdrückungsplatine (40) eine vieradrige dritte Gleichtaktdrosselspule (43) einschließt, die ausgelegt ist, um eine Gleichtaktstörkomponente der Eingangswechselstromleistung zu verringern, und
die Eingangswechselstromleistung an die erste und die zweite Gleichtaktdrosselspule (27, 28) der Stromquellenplatine (20) über die dritte Gleichtaktdrosselspule (43) der Geräuschunterdrückungsplatine (40) abgegeben wird.

6. Kühleinrichtung (60), die ausgelegt ist, um einen Kühlkreis aufzuweisen, wobei die Kühleinrichtung (60) Folgendes umfasst:
die Stromquelleneinheit (10) nach Anspruch 5; und
eine Kühleinheit (75), die ausgelegt ist, um Wechselrichter (24d, 25d) zu kühlen, die jeweils in der ersten und zweiten Stromerzeugungskreislauf (24, 25) der Stromquellenplatine (20) der Stromquelleneinheit (10) eingeschlossen sind, während in dem Kühlkreis ein Kältemittel verwendet wird.

7. Kühleinrichtung (60) nach Anspruch 6, weiter umfassend
ein Gehäuse (61), in dem die Lasten (92, 93) und die Stromquelleneinheit (10) aufgenommen sind, wobei
das Gehäuse (61) eine öffnende-schließende Platte aufweist, die fähig ist, ein Inneres des Gehäuses (61) zu öffnen, und
die Stromquellenplatine (20) der Stromquelleneinheit (10) im Inneren des Gehäuses (61) an einer der öffnenden-schließenden Platte entsprechenden Position gelegen ist.

## Revendications

1. Panneau de source de puissance (20) configuré pour fournir une pluralité de charges (92, 93) ayant différents niveaux de puissance, le panneau de source de puissance (20), comprenant :
une borne d'entrée (21) connectée à une source de puissance de courant alternatif triphasé à quatre fils (91) ;
un ensemble de fils triphasés (31r, 31s, 31t) et un fil de point neutre (31n) qui sont en conduction avec la borne d'entrée (21) ;
un premier circuit de génération de puissance (24) configuré pour générer une première puissance de sortie triphasée sur la base de la puissance de courant alternatif d'entrée provenant de la source de puissance de courant alternatif (91) ;
un second circuit de génération de puissance (25) configuré pour générer une seconde puissance de sortie monophasée sur la base de la puissance de courant alternatif d'entrée ; **caractérisé par**
une première bobine d'arrêt en mode commun (27) à trois fils connectée à l'ensemble de fils triphasés (31r, 31s, 31t) entre la borne d'entrée (21) et le premier circuit de génération de puissance (24), la première bobine d'arrêt en mode commun (27) à trois fils étant configurée pour réduire une composante de bruit en mode commun de la puissance de courant alternatif d'entrée devant être fournie au premier circuit de génération de puissance (24) par l'intermédiaire de l'ensemble de fils triphasés (31r, 31s, 31t) ; et
une deuxième bobine d'arrêt en mode commun (28) à deux fils connectée à un fil (31s) prédéterminé sur une phase dans l'ensemble de fils triphasés (31r, 31s, 31t) et au fil de point neutre (31n) entre la borne d'entrée (21) et le second circuit de génération de puissance (25), la deuxième bobine d'arrêt en mode commun (28) étant configurée pour réduire une composante de bruit en mode commun de la puissance de courant alternatif d'entrée devant être fournie au second circuit de génération de puissance (25) par l'intermédiaire du fil (31 s) prédéterminé et du fil de point neutre (31 n) ;
le panneau de source de puissance (20) comprenant en outre :
une carte de circuit imprimé (P1) sur laquelle le premier circuit de génération de puissance (24), le second circuit de génération de puissance (25), la première bobine d'arrêt en mode commun (27) et la deuxième bobine d'arrêt en mode commun (28) sont montés, dans lequel
la carte de circuit imprimé (P1) présente une forme quadrangulaire dans une vue en plan,
la carte de circuit imprimé (P1) présente, dans une vue en plan, un premier côté (P1a) et un second côté (P1b) étant face au premier côté (P1a),
la carte de circuit imprimé (P1) présente une région à haute tension (a1) et une région à basse tension (a2) entre le premier côté (P1a) et le second côté (P1b), la région à haute tension (a1) incluant le premier circuit de génération de puissance (24) et le second circuit de génération de puissance (25) montés sur celle-ci de sorte que le premier circuit de génération de puissance (24) est situé plus près du premier côté (P1a) que le second circuit de génération de puissance (25) générant la seconde puissance de sortie inférieure à la première puissance de sortie, la région à basse tension (a2) étant située plus près du second côté (P1b) que ne l'est la région à haute tension (a1), et
la première bobine d'arrêt en mode commun (27) et la deuxième bobine d'arrêt en mode commun (28) sont montées sur la région à haute tension (a1) de sorte que la deuxième bobine d'arrêt en mode commun (28) est située plus près de la région à basse tension (a2) que ne l'est la première bobine d'arrêt en mode commun (27).

2. Panneau de source de puissance (20) selon la revendication 1, dans lequel
les charges (92, 93) incluent un moteur de compresseur (92) et un moteur de ventilateur (93) d'un appareil de réfrigération (60),
le premier circuit de génération de puissance (24) est configuré pour délivrer en sortie la première puissance de sortie au moteur de compresseur (92), et
le second circuit de génération de puissance (25) est configuré pour délivrer en sortie la seconde puissance de sortie au moteur de ventilateur (93).

3. Appareil de réfrigération (60) présentant un circuit de réfrigérant, l'appareil de réfrigération (60) comprenant :
le panneau de source de puissance (20) selon les revendications 1 ou 2 ; et
une unité de refroidissement (75) configurée pour refroidir des onduleurs (24d, 25d) respectivement inclus dans les premier et second circuits de génération de puissance (24, 25) du panneau de source de puissance (20) avec un réfrigérant utilisé dans le circuit de réfrigérant.

4. Appareil de réfrigération (60) selon la revendication 3, comprenant en outre
un boîtier (61) logeant les charges (92, 93) et le panneau de source de puissance (20), dans lequel
le boîtier (61) présente une plaque d'ouverture-fermeture capable d'ouvrir un intérieur du boîtier (61), et
le panneau de source de puissance (20) est situé à l'intérieur du boîtier (61) au niveau d'une position correspondant à la plaque d'ouverture-fermeture.

5. Unité de source de puissance (10) comprenant :
le panneau de source de puissance (20) selon l'une quelconque des revendications 1 ou 2 ; et
un panneau d'annulation de bruit (40) connecté entre la source de puissance de courant alternatif (91) et le panneau de source de puissance (20), dans lequel
le panneau d'annulation de bruit (40) inclut une troisième bobine d'arrêt en mode commun (43) à quatre fils configurée pour réduire une composante de bruit en mode commun de la puissance de courant alternatif d'entrée, et
les première et deuxième bobines d'arrêt en mode commun (27, 28) du panneau de source de puissance (20) reçoivent la puissance de courant alternatif d'entrée par l'intermédiaire de la troisième bobine d'arrêt en mode commun (43) du panneau d'annulation de bruit (40).

6. Appareil de réfrigération (60) configuré pour présenter un circuit de réfrigérant, l'appareil de réfrigération (60) comprenant :
l'unité de source de puissance (10) selon la revendication 5 ; et
une unité de refroidissement (75) configurée pour refroidir des onduleurs (24d, 25d) respectivement inclus dans les premier et second circuits de génération de puissance (24, 25) du panneau de source de puissance (20) de l'unité de source de puissance (10) avec un réfrigérant utilisé dans le circuit de réfrigérant.

7. Appareil de réfrigération (60) selon la revendication 6, comprenant en outre
un boîtier (61) logeant les charges (92, 93) et l'unité de source de puissance (10), dans lequel
le boîtier (61) présente une plaque d'ouverture-fermeture capable d'ouvrir un intérieur du boîtier (61), et
le panneau de source de puissance (20) de l'unité de source de puissance (10) est situé à l'intérieur du boîtier (61) au niveau d'une position correspondant à la plaque d'ouverture-fermeture.
